Europäisches Patentamt

European Patent Office

Office européen des brevets

(19)

(11) **EP 0 875 525 B1**

(12) **EUROPÄISCHE PATENTSCHRIFT**

(45) Veröffentlichungstag und Bekanntmachung des Hinweises auf die Patenterteilung:
**29.09.1999 Patentblatt 1999/39**

(51) Int Cl.6: **C08J 7/02**, C08J 5/18,
G02B 1/08, G02B 5/12,
G02B 5/20, G02B 5/30

(21) Anmeldenummer: **98107479.2**

(22) Anmeldetag: **24.04.1998**

(54) **Verfahren zur Herstellung von dreidimensional vernetzten polymeren Materialien mit breiten cholesterischen Reflexionsbanden, und nach diesem Verfahren hergestellte Filter, Reflektoren und Polarisatoren**

Process for producing three-dimensionally cured polymer materials having broad cholesteric reflection-bands, and so produced filters, reflectors and polarizers

Procédé de préparation de matériaux polymères réticulés tridimensionnellement à bandes larges cholestériques de réflexion, et filtres, réflecteurs et polariseurs produits par ce procédé

(84) Benannte Vertragsstaaten:
**CH DE FR GB LI NL**

(30) Priorität: **30.04.1997 DE 19718293**

(43) Veröffentlichungstag der Anmeldung:
**04.11.1998 Patentblatt 1998/45**

(73) Patentinhaber: **Consortium für Elektrochemische Industrie GmbH**
**81379 München (DE)**

(72) Erfinder:
• **Leigeber, Horst**
**82041 Oberhaching (DE)**
• **Hanelt, Eckhard, Dr.**
**82269 Geltendorf (DE)**
• **Kreuzer, Franz-Heinrich, Dr.**
**82152 Martinsried (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
**EP-A- 0 220 828**          **GB-A- 2 180 243**

• **DATABASE WPI Section Ch, Week 9432 Derwent Publications Ltd., London, GB; Class A89, AN 94-257675 XP002900073 & JP 06 186 534 A (NIPPON OIL CO LTD)**
• **DATABASE WPI Section Ch, Week 8613 Derwent Publications Ltd., London, GB; Class A89, AN 86-085477 XP002900074 & JP 61 032 801 A (MATSUSHITA ELEC IND CO LTD)**

**Beschreibung**

Die Erfindung betrifft Verfahren zur Herstellung von dreidimensional vernetzten polymeren Materialien mit breiten cholesterischen Reflexionsbanden, und nach diesem Verfahren hergestellte Filter, Reflektoren und Polarisatoren.

Üblicherweise zeigen orientierte cholesterische Schichten eine Molekülanordnung, bei der die Achse der sich aus den mesogenen Gruppen ausbildenden Helix senkrecht zu den beiden Begrenzungsflächen des Filmes ausgerichtet ist. Die Ganghöhe der Helix ist konstant über die Schichtdicke. Solche Filme sind optisch aktiv und zeichnen sich dadurch aus, daß unpolarisiert einfallendes Licht im Bereich der Reflexionswellenlänge in zwei zirkularpolarisierte Teilstrahlen zerlegt wird, wobei ein Teilstrahl reflektiert und der andere Teilstrahl transmittiert wird. Die beiden Lichtanteile unterscheiden sich durch die Händigkeit, die durch das in der optisch aktiven Schicht vorhandene Chiralikum bestimmt wird. Art und Anteil des Chiralikums solcher cholesterischer Flüssigkristalle bestimmen die Ganghöhe der verdrillten Struktur und damit die Wellenlänge des reflektierten Lichtes. Die Verdrillung der Struktur kann sowohl links- als auch rechtshändig sein. Die Reflexionsfarbe steht in Beziehung zur Ganghöhe der verdrillten Struktur, als Pitch p bezeichnet, und dem mittleren molekularen Brechungsindex n. Es gilt die Beziehung für die zentrale Wellenlänge des reflektierten Lichtes:

$$\lambda = n \times p$$

Das reflektierte Licht hat eine Bandbreite, die sich aus der Differenz der beiden Brechungsindices ergibt:

$$\Delta\lambda = p \times (n_e - n_o)$$

$n_o$ und $n_e$ bezeichnen den Brechungsindex des ordentlichen und des außerordentlichen Strahls, während für den mittleren Brechungsindex n die Beziehung gilt:

$$n = \tfrac{1}{2}(n_o + n_e)$$

Polymere mit einer cholesterischen Phase besitzen üblicherweise einen Brechungsindexunterschied $\Delta n$ von 0,1 bis 0,2, so daß sich für Licht im sichtbaren Spektralbereich eine Bandbreite des reflektierten Lichtes von <100 nm ergibt. Vielfach liegen die Bandbreiten nur bei 30 - 50 nm, insbesondere für Licht im blauen Bereich des optischen Spektrums.

Durch die Kombination solcher cholesterischen Filme mit einem Verzögerungselement mit $\lambda$/4-Eigenschaft wird die Erzeugung von linear polarisiertem Licht ermöglicht. Beschrieben sind solche Kombinationen unter Verwendung von cholesterischen Polymeren z. B. bei R. Maurer u. a. unter dem Titel " Polarizing Color Filters made from Cholesteric LC Silicones", SID 90 Digest, 1990, S. 110 - 113.

Cholesterische Schichten, die im Bereich von Filtern und Reflektoren angewendet werden, erfordern die Einstellung der optischen Eigenschaften über einen weiten Spektralbereich, wobei sowohl die Mittenwellenlänge der Reflexionsbande als auch die Breite der Bande möglichst flexibel einstellbar sein sollte. Die Anpassung der Bandbreite kann bisher nur in einem schmalen Bereich erfolgen, der sich aus den beschränkten Möglichkeiten der Brechungsindexveränderung durch Moleküloptimierung ergibt. Üblicherweise wird durch Kombination von geeigneten Monomeren und einem geeigneten Chiralikum vor der Vernetzung ein Polymer mit dieser limitierten Bandbreite eingestellt und durch die Vernetzung fixiert. Nach der Vernetzung ist normalerweise keine Korrektur möglich.

Vielfach werden aber optisch aktive Schichten benötigt, deren Bandbreite den gesamten sichtbaren Spektralbereich des Lichtes abdeckt. Dazu sind Bandbreiten von mindestens 250 nm erforderlich. Das ist erreichbar durch Kombination von mehreren Schichten aus cholesterischen Polymeren mit unterschiedlichem Pitch. Einen Vorschlag hierzu findet man bei R. Maurer, wie oben zitiert. Die Herstellung solcher Mehrfachschichten ist aufwendig und kostenintensiv.

Theoretische Überlegungen von R. Dreher, Solid State Communications, Vol. 12, S. 519-522, 1973, S. Mazkedian, S. Melone, F. Rustichelli, J. Physique Colloq. 36,C1 - 283 (1974) und L. E. Hajdo, A. C. Eringen, J Opt. Soc. Am. 36, 1017 (1976) zeigen, daß ein helikaler Schichtaufbau, dessen Pitch sich linear über die Schichtdicke des Filmes ändert, die Fähigkeit besitzen sollte, Licht in einem breiten Bandbereich zu reflektieren. Bei R. S. Pindak, C. C. Huang, J. T. Ho, Phys. Rev. Lett. 32, 43 (1974) ist die Erzeugung eines Pitchgradienten in Cholesterylnonanoaten durch einen Temperaturgradienten beschrieben. Nachteil des beschriebenen Verfahrens ist es, daß wegen der in der Regel guten Wärmeleitfähigkeit von Polymeren in dünnen Filmen nur schwer hohe Temperaturgradienten aufgebaut werden können. Der erzeugte Pitchgradient ist nur bei der jeweiligen Temperatur sichtbar.

In EP 0 606 940 A2 (Broer et al) ist beschrieben, durch Diffusion unterschiedlicher Monomerer (chiral und nicht chiral) während der gleichzeitigen und langsamen Vernetzung die Ausbildung einer Helix mit kontinuierlich verändertem Pitch zu erzeugen. Die Verwendung eines zusätzlichen Farbstoffes zur Erzeugung eines axialen Gradienten der Lichtintensität ist für größere Bandbreiten erforderlich. Neben der langen Belichtungsdauer mit UV-Licht beschränkt der zusätzliche Farbstoff die spektrale Bandbreite im Bereich kurzer Wellenlängen. Ein weiterer Nachteil dieses Verfahrens ist die Tatsache, daß durch eine Einengung auf bestimmte Monomere und Chiralika wenig Flexibilität bezüglich optimaler flüssigkristalliner Eigenschaften und der präparativen Handhabung möglich ist.

Die Erfindung betrifft Verfahren zur Herstellung von orientierten dreidimensional vernetzten polymeren Materialien mit verbreiterter cholesterischer Reflexionsbande, die dadurch gekennzeichnet sind, daß polymere Materialien mit cholesterischen Eigenschaften die einen extrahierbaren Materialanteil enthalten, mit einem Lösungsmittel oder Lösungsmittelgemisch in Kontakt gebracht werden.

Unter polymeren Materialien, die einen extrahierbaren Materialanteil enthalten, sind vorzugsweise dreidimensional vernetzte polymere Materialien zu verstehen, deren Netzwerk nicht vollständig ausgebildet ist oder deren Netzwerk einen extrahierbaren Anteil enthält.

Unter extrahierbarem Materialanteil ist jeder Anteil zu verstehen, der ohne Störung der Struktur in einem cholesterischen Netzwerk vorhanden ist ohne selbst an das cholesterische Netzwerk angeknüpft zu sein, und der wieder aus diesem Netzwerk herausgelöst werden kann.

Durch den Kontakt mit dem Lösungsmittel oder Lösungsmittelgemisch werden nicht an das cholesterische Netzwerk gebundene Anteile aus dem Netzwerk entfernt.

Der Kontakt mit dem Lösungsmittel erfolgt vorzugsweise durch Tauchen, Überschichten oder Besprühen.

Das Volumenverhältnis von Lösungsmittel zu polymerem Materialfilm ist vorzugsweise größer als 0,1.

Die erfindungsgemäße Behandlung des polymeren Materials mit Lösungsmittel erfolgt vorzugsweise bei Temperaturen zwischen -30° und 150°, besonders bevorzugt bei Raumtemperatur.

Polymere Materialien mit cholesterischen Eigenschaften, die im erfindungsgemäßen Verfahren eingesetzt werden können, lassen sich beispielsweise dadurch erhalten, daß die Vernetzungsreaktion der Ausgangskomponenten vorzeitig abgebrochen wird, so daß ein Teil der an sich vernetzungsfähigen Anteile unvernetzt vorliegt.

Dies läßt sich beispielsweise bei einem photochemisch vernetzbaren Monomer oder Polymer durch Verkürzen der UV-Belichtungszeit erreichen.

Ein zweiter Weg zur Herstellung von Polymeren, die im erfindungsgemäßen Verfahren eingesetzt werden können, ist die Verwendung so geringer Photoinitiatorgehalte in der Mischung der Ausgangskomponenten zur Herstellung der Polymeren, daß trotz intensiver Bestrahlung nur ein Teil der Vernetzungsreaktion ablaufen kann.

Eine dritte Möglichkeit zur Herstellung von Polymeren, die im erfindungsgemäßen Verfahren eingesetzt werden können, besteht darin, ein nichtvernetzbares Polymer oder Oligomer, das mit der cholesterischen Phase verträglich ist, der Mischung der Ausgangskomponenten zur Herstellung der Polymeren zuzusetzen.

Eine vierte Möglichkeit zur Herstellung von Polymeren, die im erfindungsgemäßen Verfahren eingesetzt werden können, ist die Verwendung von Ausgangsmaterialien mit sehr geringen Konzentrationen von vernetzungsfähigen Gruppen.

Diese nicht abschließende Aufzählung zeigt beispielhaft, wie man einen gewissen Anteil an extrahierbarem Material im Polymer erhält.

Die Herstellung solcher teilvernetzten Netzwerke ist nicht auf photopolymerisierbare Systeme beschränkt. So sind Monomere, Oligomere, Polymere, die durch thermisch aktivierbare Radikalbildner in teilvernetzte Polymerisate übergeführt werden können, gleichermaßen geeignet wie Monomere, Oligomere, Polymere, die durch Polyaddition oder Polykondensation teilvernetzte Polymerisate ergeben.

Solche teilvernetzten polymeren Materialien mit cholesterischen Eigenschaften lassen sich aus beliebigen Materialien herstellen, die sich zur Herstellung polymerer Materialien mit cholesterischen Eigenschaften eignen. Solche Materialien sind beispielsweise aus EP-358208 (entspricht US 5,211,877) oder EP 66137 (entspricht US 4,388,453) bekannt, wobei die Vernetzungsreaktion zur Herstellung des polymeren Materials vor vollständiger Vernetzung beendet werden muß. Für die Materialien in den beispielhaft genannten Literaturstellen wird die schwächere Vernetzung vorzugsweise durch sehr kurze UV-Belichtung oder durch Reduzierung der Anzahl der vernetzungsfähigen Gruppen oder sehr geringe Konzentration des Photoinitators erreicht.

Beispiele für extrahierbare polymerisierbare Gruppen sind auch in US 4,637 896 oder US 660 038 beschrieben.

Vorzugsweise wird im erfindungsgemäßen Verfahren als teilvernetztes cholesterisches Polymer ein -Polymer mit einem extrahierbaren Anteil von bis zu 90 % verwendet.

Vorzugsweise wird das teilvernetzte cholesterische Polymer in Form von Schichten, besonders bevorzugt in Form von Filmen eingesetzt. Die Schichten haben vorzugsweise eine Dicke von 5 bis 200 μm besonders bevorzugt 15 bis 80 μm.

Die Extraktion erfolgt vorzugsweise mit Lösungsmitteln oder Mischungen aus verschiedenen Lösungsmitteln, bei denen der Löslichkeitsparameter gleich oder ähnlich ist dem Löslichkeitsparameter des zu extrahierenden Polymers, bzw. dessen löslichen Anteilen. Diese Lösungsmittel werden im folgenden auch als Extraktionsmittel bezeichnet.

Unter Lösungsmitteln mit ähnlichen Löslichkeitsparametern sind im Sinne der Erfindung Lösungsmittel zu verstehen, deren Löslichkeitsparameter um nicht mehr als 5 Einheiten vom Löslichkeitsparameter des zu extrahierenden Polymers bzw. dessen löslichen Anteilen abweicht. Angaben zu Löslichkeitsparametern findet man z. B. im Polymer Handbook, J. Brandrup, E. H. Immergut, Verlag J. Wiley & Sons 1975, Kapitel IV, S. 337 - 353. Dort ist auch ein Verfahren beschrieben zur Bestimmung desselben.

Je geringer der Unterschied zwischen dem Löslichkeitsparameter des verwendeten Extraktionsmittels und dem Löslichkeitsparameter des Polymers, beispielsweise eines flüssigkristallinen Polysiloxans beziehungsweise dessen löslichen Anteilen im Netzwerk ist, desto intensiver ist der Diffusions- und Extraktionsprozeß.

Es zeigt sich, daß Extraktionsmittel, die im Löslichkeitsparameter um weniger als 2 - 3 Einheiten vom Wert des zu extrahierendes Polymers entfernt sind, besonders wirksam sind. Zur Behandlung der teilvernetzten polymeren Materialien kann auch ein Gemisch aus 2 oder mehr Lösungsmitteln verwendet werden, wobei mindestens ein Lösungsmittel, dessen Löslichkeitsparameter um nicht mehr als 5 Einheiten vom Löslichkeitsparameter des zu extrahierenden Polymers bzw. dessen löslichen Anteilen abweicht, zu mehr als 0,01 Vol-% in dem Lösungsmittelgemisch enthalten ist. Durch Kombination verschiedener Lösungsmittel können Umfang und Kinetik des Extrahierens beeinflußt werden.

Beispielsweise zeigte sich bei den Polysiloxanen, wie sie in den Beispielen eingesetzt werden, daß diejenigen Lösungsmittel eine hohe Extraktion erzeugen, deren Löslichkeitsparameter 17 - 21 $(J/m^3)^{1/2}$ beträgt, wobei der Löslichkeitsparameter des zu extrahierenden Polysiloxans bei 19 $(J/m^3)^{1/2}$ liegt. Bei diesen Lösungsmitteln, kann eine zu schnelle Extraktion durch ein zweites, weniger aktives Lösungsmittel gebremst werden. Beispielhaft seien hierzu Glykole (z. B. Diethylenglykol) oder kurzkettige Alkohole (z. B. Hexanol) genannt. Bei Extraktionsmitteln mit Werten von < 17 oder > 21 verlangsamt sich bei den in den Beispielen verwendeten Polymeren die Extraktion zunehmend. Die Verbreiterung der Reflexionsbande ist bei gleicher Einwirkzeit des Extraktionsmittels geringer als bei Extraktionsmitteln mit Lösungsmittelparametern > 17 und < 21.

Die Extraktion im erfindungsgemäßen Verfahren erfolgt vorzugsweise so, daß ein Gradient in der Dichte des Netzwerkes senkrecht zur Oberfläche des Polymers entsteht.

Bei einer Verfahrensvariante des erfindungsgemäßen Verfahrens befindet sich das teilvernetzte polymere Material in orientiertem und teilvernetztem Zustand auf einem lösungsmittelundurchlässigen Trägermaterial und wird so in das Extraktionsmittel eingebracht. Das Eindiffundieren des Extraktionsmittels und die Extraktion der nichtvernetzten Anteile erfolgt deshalb nur von einer Grenzfläche des Filmes aus.

In einer anderen Verfahrensvariante des erfindungsgemäßen Verfahrens wird ein trägerfreier Polymerfilm oder ein Polymerfilm auf einem für das verwendete Extraktionsmittel permeablen Träger in das Extraktionsmittel eingebracht. Dadurch kann das Extraktionsmittel von beiden Seiten in den Polymerfilm eindringen. Dadurch entsteht von beiden Schichtseiten des Filmes aus eine Extraktion mit der Folge eines beidseitigen Netzwerksdichtegradienten im Polymerfilm.

Zur Erzielung eines maximalen Netzwerkdichtegradienten wird die Tauchzeit im Extraktionsmittel zeitlich so limitiert, daß die dem Schichtträger zugewandte Filmseite gerade noch nicht extrahiert wird und die dem Extraktionsmittel zugewandte Seite des Filmes maximal extrahiert wird.

Durch Variation der Tauchzeit und/oder des Extraktionsmittels lassen sich unterschiedliche Netzwerkdichtegradienten im polymeren Material herstellen.

Vorzugsweise wird das Extraktionsmittel welches nach dem Tauchbad noch auf dem Polymerfilm vorhanden ist, anschließend vom Polymer entfernt.

Dies geschieht beispielsweise mittels eines das Extraktionsmittel resorbierenden Materials oder indem das Polymer in eine Flüssigkeit die mit dem Extraktionsmittel mischbar ist, getaucht wird oder mit dieser besprüht und anschließend getrocknet wird.

Der Löslichkeitsparameter der Flüssigkeit zur Entfernung des Extraktionsmittels soll vorzugsweise um mindestens eine Einheit weiter vom Löslichkeitsparameter des Polymers entfernt sein als der Löslichkeitsparameter das verwendete Extraktionsmittels.

Der Verfahrensschritt der Entfernung des Extraktionsmittels kann auch mehrstufig durchgeführt werden. Dabei wird für jeden weiteren Verfahrensschritt eine Flüssigkeit ausgewählt, deren Löslichkeitsparameter jeweils immer weiter vom Löslichkeitsparameter des Extraktionsmittels entfernt ist.

Es ist beispielsweise auch möglich den noch Extraktionsmittel enthaltenden Polymerfilm direkt zu trocknen. Dies geschieht vorzugsweise bei 10°C - 140°C und einem Druck von 0,1 - 1200 mbar.

Nach Entfernen und Abtrocknen des Extraktionsmittels liegt im Film ein Netzwerkdichtegradient vor. Das auf einen solchen erfindungsgemäß erhaltenen Film treffende Licht wird in einer solchen Breite des elektromagnetischen Spektrums derart beeinflußt, daß die langwellige Bandkante des reflektierten Lichts mit der ursprünglichen Reflexionsbande annähernd übereinstimmt, während die Lage der kurzwelligen Bandkante des reflektierten Lichts bestimmt wird durch den extrahierten Anteil des Polymers. Sie ist somit durch die Art des Extraktionsmittels und auch durch die Tauchzeit bestimmt.

Es muß durch geeignete Prozeßführung sichergestellt sein, daß der Extraktionsprozeß nicht über die gesamte Dicke des polymeren Materials das gleiche Ausmaß annimmt.

Vorzugsweise sollte das Extraktionsmittel nicht komplett das polymere Material durchdringen.

Vorzugsweise werden die nach der Extraktion noch im polymeren Material vorhandenen polymerisierbaren Reste nachvernetzt.

Dies erfolgt beispielsweise durch Nachvernetzung mittels aktinischem Licht. Es ist jedoch ebenso möglich mittels anderer, bekannter Vernetzungsverfahren, z.B. mit Hilfe eines thermisch aktivierbaren Radikalbildners die Nachvernetzung durchzuführen.

Nach der erfindungsgemäßen Behandlung, die einen Netzwerksdichtegradienten erzeugt, zeigt sich eine Verbreiterung der cholesterischen Reflexionsbande des polymeren Materials.

Die Erfindung betrifft auch polymere Materialien mit cholesterischen Eigenschaften, die dadurch gekennzeichnet sind, daß das polymere Material einen Dichtegradienten seines polymeren Netzwerks aufweist der bewirkt, daß das polymere Material eine cholesterische Reflexionsbande einer Breite von mindestens 100 nm besitzt.

Vorzugsweise liegt das erfindungsgemäße polymere Material in Form von Filmen vor.

Diese Filme werden analog zu bekannten cholesterischen Filmen hergestellt mit dem Unterschied, daß die cholesterischen Materialien nicht vollständig polymerisiert sondern nur teilvernetzt werden und anschließend mit einem Lösungsmittel in Kontakt gebracht werden. Die Herstellung cholesterischer Filme ist beispielsweise aus US 5,211,877 bekannt.

Die Erfindung betrifft somit auch cholesterische Filme enthaltend polymere Materialien mit cholesterischen Eigenschaften, die dadurch gekennzeichnet sind, daß das polymere Material einen Netzwerksdichtegradient aufweist, der bewirkt, daß das polymere Material eine cholesterische Reflexionsbande einer Breite von mindestens 100 nm besitzt.

Diese erfindungsgemäßen cholesterischen Filme haben vorzugsweise eine Reflexionsbande mit einer Bandbreite von bis zu 2800 nm im Spektralbereich von 200 - 3000 nm, insbesondere eine Reflexionsbande mit einer Bandbreite von 100 nm bis zu 300 nm im Spektralbereich von 400 - 700 nm oder eine Reflexionsbande mit einer Bandbreite von 50 nm bis zu 250 nm im Spektralbereich von 200 - 450 nm oder eine Reflexionsbande mit einer Bandbreite von 100 nm bis zu 500 nm im Spektralbereich von 500 - 3000 nm.

Die cholesterischen Filme eignen sich insbesondere als Breitband-Filter, Polarisatoren und Reflektoren.

Die Erfindung betrifft somit auch Breitband-Filter, Polarisatoren und Reflektoren bestehend aus erfindungsgemäßen cholesterischen Materialien vorzugsweise in der Form von Filmen.

Anwendungsbeispiele sind cholesterische Reflektoren zur Erhöhung der Lichtausbeute bei der Beleuchtung von LC-Displays, Polarisatoren bei Projektdisplays, strukturierte mehrfarbige Filter für Anzeige-Displays, Sichterheitsmarken im Wertdruck sowohl innerhalb, als auch außerhalb des sichtbaren Spektralbereiches sowie Filter und Reflektoren für Infrarotstrahlung.

Die erfindungsgemäßen Filter, Polarisatoren und Reflektoren können strukturiert und/oder mehrfarbig sein. Sie bestehen aus cholesterischen Filmen, bei denen bei der Teilvernetzung unter Verwendung von Photomasken und verschiedenen Temperaturen in der Filmfläche Bereiche mit verschiedenen Mittenwellenlängen der Reflexionsbande erzeugt werden. Die Farbsegmente können einzeln, in Gruppen oder alle gemeinsam den Verfahrensschritten zur Bandenverbreiterung ausgesetzt werden.

Die Erfindung betrifft ferner optische Elemente bestehend aus strukturierten mehrfarbigen Filtern, Reflektoren oder Polarisatoren und Verzögerungselementen für das Licht, das den selektierten Wellenlängenbereichen der mehrfarbigen Strukturen entspricht.

Vorzugsweise bestehen diese optischen Elemente aus erfindungsgemäßen cholesterischen Filmen und einem optischen Verzögerungselement mit einer Verzögerung von 50 - 5000 nm für Licht der Wellenlänge 500 nm. Das Verzögerungselement kann gleichzeitig als Trägermaterial dienen.

Vorzugsweise verzögert das optische Verzögerungselement um eine Viertel-Wellenlängeneinheit des selektierten reflektierten Lichtes, welches einem Teil des Spektralbereiches der cholesterischen Reflexionsbande des Polymers entspricht.

Besonders bevorzugt sind dabei optische Verzögerungselemente mit einer Viertel-Wellenlängeneinheit, bezogen auf den gesamten Spektralbereich welcher der cholesterischen Reflexionsbande des Polymers entspricht.

Zusätzlich können die optischen Elemente noch eine Antireflexbeschichtung aufweisen.

Fig. 1 zeigt ein Transmissionsspektrum des Films aus Beispiel 1.

Fig. 2 zeigt ein Reflexionsspektrum des Films aus Beispiel 2.

Die folgenden Beispiele dienen der weiteren Erläuterung der Erfindung.

Beispiel 1: Herstellung von Film 1:

Die Substanz Wacker-LC-Silicon-CC3767 (erhältlich bei Wacker-Chemie GmbH; 81737 München) ist ein cholesterisches, flüssigkristallines Organosiloxan. Die Substanz wird mit 2 Gew.% Photoinitiator Irgacure 907 (Fa. Ciba-Geigy) versetzt und anschließend bei 90° C auf eine Glasplatte mit geriebener Polyimidbeschichtung (Fa. Merck PI-Kitt 2650) aufgebracht.

Nach Abdecken mit einer zweiten, ebenfalls polyimidbeschichteten Glasplatte werden die beiden Glasplatten gegeneinander bewegt, um den Schmelzfilm zu verteilen. Zwischen den beiden Glasplatten befinden sich Spacer mit 36 μm Dicke, so daß sich eine entsprechende Filmdicke des Organosiloxan/Photoinitiatorfilms einstellt. Der Film wird bei 80°C 2 sec mit UV-Licht (40 mW/cm$^2$ im UVA-Bereich) bestrahlt. Eine Glasplatte wird entfernt. Die Glasplatte mit dem anhaftenden Film wird wie unten beschrieben vermessen. Sie zeigt in Transmission eine Bande bei 651 nm mit einer Breite von 57 nm im Plateau. Das reflektierte Licht ist linkshelikal polarisiert.

Der Film wird auf der Glasplatte in eine Mischung aus 10 Vol.-Teilen 1-Hexanol (Löslichkeitsparameter 21,9, gemäß Polymer Handbook) und 9 Vol.-Teilen Furan (Löslichkeitsparameter 19,2) eingetaucht, nach 10 Sekunden herausgezogen, 2 Sekunden in reinem Hexanolbad eingetaucht und bewegt und 2 Minuten bei 90°C auf einer Heizplatte das Restlösungsmittel abgedampft.

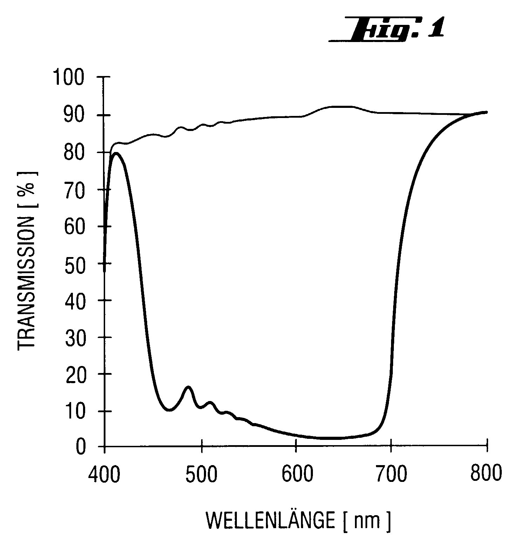

Der Film wurde in Transmission vermessen. Die Messung erfolgte in einem Spektralphotometer (Fa. Perkin Elmer Lambda 19, bzw. Fa. Instrument Systems Spectro 320) mit zirkularpolarisiertem Licht, das mittels Linearpolarisator und $\lambda/4$-Fresnelrhombus, beide aus Kalkspat, erzeugt wurde. Die Messung zeigt den transmittierten Anteil des Lichtes für die beiden Zirkularpolarisationen. Das Ergebnis ist in Fig. 1 dargestellt. Die charakteristische Breite der Bande der cholesterischen Reflexion ist von ursprünglich 57 nm auf 250 nm verbreitert. Der Film selektiert die beiden Zirkularpolarisationen über den gesamten Bandbereich der verbreiterten Reflexionsbande von 650-400 nm.

Beispiel 2: Herstellung von Film 2:

Die beiden Verbindungen A und B, (A: Erhalten durch Hydrosilylierung von Tetramethyldisiloxan mit 50 Mol% Methacrylsäure(4-allyloxybenzoyl-4-hydroxyphenyl)ester und 50 Mol% 4-Allyloxybenoesäure-cholesterolester; B: Erhalten durch Hydrosilylierung von Tetramethyldisiloxan mit 50 Mol% Methacrylsäure (4-allyloxybenzoyl-4- hydroxyphenyl)ester und 50 Mol% 4-Allyloxybenoesäure-dihydro- cholesterolester) werden im Verhältnis von A: = 19 Gew.-% und B: = 81 Gew.-% gemischt. Zu diesen 100 Gewichtsteilen werden 2 Gewichtsteile Photoinitiator Irgacure 907 (Fa. Ciba-Geigy) gegeben.

Die Substanzmischung wird bei 90°C auf eine Glasplatte mit geriebener Polyimidbeschichtung (Fa. Merck PI-Kitt 2650) aufgebracht. Nach Abdecken mit einer zweiten, ebenfalls polyimid-beschichteten Glasplatte werden die beiden Glasplatten gegeneinander bewegt, um den Schmelzfilm zu verteilen. Zwischen den beiden Glasplatten befinden sich Spacer mit 36 µm Dikke, so daß sich eine entsprechende Filmdicke einstellt. Der Film wird bei 85°C 2 sec mit UV-Licht (40 mW/cm$^2$ im UVA-Bereich) bestrahlt. Eine Glasplatte wird entfernt. Die Glasplatte mit dem anhaftenden Film wird wie in Beispiel 1 beschrieben unter Verwendung eines Reflexionszusatzes mit 6°/6°-Geometrie vermessen. Sie zeigt in Reflexion eine Bande bei 663 nm mit einer Breite von 34 nm im Plateau. Das reflektierte Licht ist linkshelikal polarisiert.

Der Film wird in eine Mischung aus 10 Vol.-Teilen 1-Hexanol (Löslichkeitsparameter 21,9) und 7 Vol.-Teilen xylol (Löslichkeitsparameter 18,0) eingetaucht. Nach 5 Sekunden herausgezogen und 2 Minuten bei 90°C auf der Heizplatte das Restlösungsmittel abgedampft. Der Film wurde in Reflexion vermessen wie in Bsp. 1 beschrieben. Die Messung erfolgte mit zirkularpolarisiertem Licht, das wie in Beispiel 1 beschrieben, erzeugt wurde.

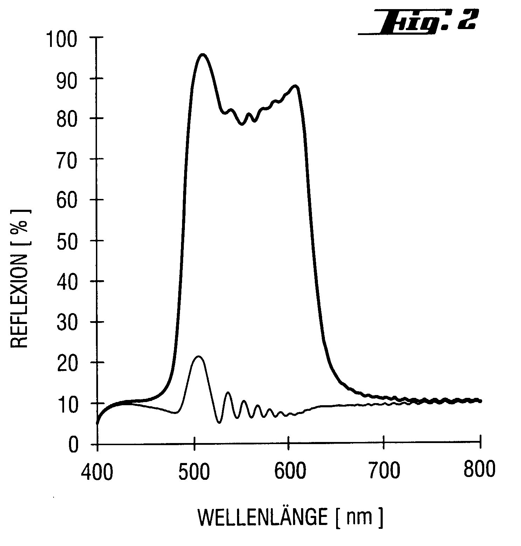

Fig. 2 zeigt ein Reflexionsspektrum dieses Filmes. Die charakteristische Breite der Bande der cholesterischen Reflexion ist von ursprünglich 34 nm auf 125 nm verbreitert. Der Film selektiert in Reflexion die beiden Zirkularpolarisationen über den Wellenlängenbereich von 625 - 500 nm.

## Patentansprüche

1. Verfahren zur Herstellung von orientierten dreidimensional vernetzten polymeren Materialien mit verbreiterter cholesterischer Reflexionsbande, dadurch gekennzeichnet, daß polymere Materialien mit cholesterischen Eigenschaften, die einen extrahierbaren Materialanteil enthalten, mit einem Lösungsmittel oder Lösungsmittelgemisch in Kontakt gebracht werden.

2. Verfahren nach Anspruch 1, dadurch gekennzeichnet, daß als polymeres Material mit cholesterischen Eigenschaften, das einen extrahierbaren Materialanteil enthält, ein teilvernetztes cholesterisches Polymer mit einem extrahierbaren Anteil von bis zu 90 % verwendet wird.

3. Verfahren nach Anspruch 1 - 2, dadurch gekennzeichnet, daß zur Behandlung (Extraktion) ein Lösungsmittel mit einem Löslichskeitsparameter, dessen Wert dem des Polymers entspricht oder um nicht mehr als 5 Einheiten davon abweicht, verwendet wird.

4. Verfahren nach Anspruch 1 - 3, dadurch gekennzeichnet, daß nach Lösungsmittelbehandlung noch im Polymerfilm verbleibende Doppelbindungen nachvernetzt werden.

5. Polymeres Material mit cholesterischen Eigenschaften, das dadurch gekennzeichnet ist, daß es einen Dichtegradienten seines polymeren Netzwerks aufweist, der bewirkt, daß das polymere Material eine cholesterische Reflexionsbande einer Breite von mindestens 100 nm besitzt.

6. Cholesterische Filme, dadurch gekennzeichnet, daß sie aus polymerem Material gemäß Anspruch 5 bestehen.

7. Cholesterische Filme gemäß Anspruch 6, dadurch gekennzeichnet, daß die Reflexionsbande im Spektralbereich von 200 - 3000 nm liegt bei einer Bandbreite von bis zu 2800 nm.

8. Cholesterische Filme gemäß Anspruch 6, dadurch gekennzeichnet, daß die Reflexionsbande in Teilbereichen des Filmes unterschiedlich ist.

9. Breitband-Filter, Polarisatoren und Reflektoren bestehend aus cholesterischem Material gemäß Anspruch 5.

**Claims**

1. Process for the production of oriented, three-dimensionally crosslinked polymeric materials having a broadened cholesteric reflection band, characterized in that polymeric materials having cholesteric properties and an extractable material content are brought into contact with a solvent or solvent mixture.

2. Process according to Claim 1, characterized in that the polymeric material having cholesteric properties and an extractable material content is a partially crosslinked cholesteric polymer having an extractable content of up to 90%.

3. Process according to Claim 1 or 2, characterized in that the treatment (extraction) is carried out using a solvent having a solubility parameter whose value corresponds to that of the polymer or differs therefrom by not more than 5 units.

4. Process according to Claims 1-3, characterized in that double bonds remaining in the polymer film after the solvent treatment are post-crosslinked.

5. Polymeric material having cholesteric properties, which is characterized in that it has a density gradient in its polymeric network which causes the polymeric material to have a cholesteric reflection band with a width of at least 100 nm.

6. Cholesteric film, characterized in that it consists of polymeric material according to Claim 5.

7. Cholesteric film according to Claim 6, characterized in that the reflection band is in the spectral region from 200 to 3000 nm, with a band width of up to 2800 nm.

8. Cholesteric film according to Claim 6, characterized in that the reflection band is different in sub-regions of the film.

9. Broad-band filter, polarizer or reflector consisting of cholesteric material according to Claim 5.

**Revendications**

1. Procédé de préparation de matériaux polymères réticulés orientés tridimensionnellement ayant une bande de réflexion cholestérique élargie, caractérisé en ce que des matériaux polymères possédant des propriétés cholestériques, qui contiennent une proportion de matériau extractible, sont mis en contact avec un solvant ou un mélange de solvants.

2. Procédé suivant la revendication 1, caractérisé en ce qu'on utilise comme matériau polymère ayant des propriétés cholestériques, qui contient une proportion de matériau extractible, un polymère cholestérique partiellement réticulé ayant une proportion extractible allant jusqu'à 90%.

3. Procédé suivant la revendication 1-2, caractérisé en ce que, pour le traitement (extraction), on utilise un solvant ayant un paramètre de solubilité dont la valeur correspond à celui du polymère ou n'en dévie pas de plus de 5 unités.

4. Procédé suivant la revendication 1-3, caractérisé en ce qu'on réticule ultérieurement des doubles liaisons restant encore dans le film polymère après traitement au solvant.

5. Matériau polymère ayant des propriétés cholestériques, caractérisé en ce qu'il présente un gradient de densité de son réseau polymère qui fait en sorte que le matériau polymère possède une bande de réflexion cholestérique d'une largeur d'au moins 100 nm.

6. Films cholestériques, caractérisés en ce qu'ils sont constitués d'un matériau polymère suivant la revendication 5.

7. Films cholestériques suivant la revendication 6, caractérisés en ce que la bande de réflexion se situe dans une zone spectrale de 200-3000 nm pour une largeur de bande allant jusqu'à 2800 nm.

8. Films cholestériques suivant la revendication 6, caractérisés en ce que la bande de réflexion est différente dans des régions partielles du film.

9. Filtres à large bande, polarisateurs et réflecteurs constitués d'un matériau cholestérique suivant la revendication 5.

Fig. 1

Fig. 2